# EUROPEAN PATENT SPECIFICATION

(11) **EP 3 139 544 B1**
(45) Date of publication and mention of the grant of the patent: **15.05.2019**
(21) Application number: 16153517.4
(22) Date of filing: 29.01.2016
(51) Int. Cl.: H04L 12/28

(54) **METHOD AND SYSTEM FOR EXTENDING FUNCTIONALITY OF PRIMARY ELECTRONIC APPLIANCE INTER-CONNECTED WITH SECONDARY ELECTRONIC APPLIANCES**
VERFAHREN UND SYSTEM ZUR ERWEITERUNG DER FUNKTION VON PRIMÄREN ELEKTROGERÄTEN, DIE MIT SEKUNDÄREN ELEKTROGERÄTEN VERBUNDEN SIND
PROCÉDÉ ET SYSTÈME POUR ÉTENDRE UNE FONCTIONNALITÉ D'UN APPAREIL ÉLECTRONIQUE PRIMAIRE INTERCONNECTÉ AVEC DES APPAREILS ÉLECTRONIQUES SECONDAIRES

(30) Priority: 03.09.2015 IN 4669CH2015
(43) Date of publication of application: 08.03.2017
(73) Proprietor: Wipro Limited, 560 035 Karnataka (IN)
(72) Inventor: JOSE, Tinku Malayil, 560068 Karnataka (IN); VERMA, Manish, 560035 Karnataka (IN)
(74) Representative: Finnegan Europe LLP

(56) References cited:
- WO-A1-2015/126198
- WO-A2-01/63413

## Description

### TECHNICAL FIELD

The present subject matter is related in general to electronic appliances, and more particularly, but not exclusively to a method and system for extending functionality of a primary electronic appliance inter-connected with one or more secondary electronic appliances.

### BACKGROUND

Generally, the smart home network allows electronic appliances to form an intelligent system and provide users with an automated living environment. The electronic appliances in the smart home network include, but are not limited to, a refrigerator, an air conditioner, a heating unit, an air cooler, home security systems, for example security locks of gates and doors, gas leakage detector, lighting. These electronic appliances are controlled by a centralized gateway. The centralized gateway may be implemented in numerous ways and provides a central point for building the home network.

With the advent of cost effective and high performance system on chip (SOC's), most of the electronic appliances at home are capable of handling functionality/operation much beyond what it is primarily intended to do. However, these electronic appliances are not using its capabilities which will help in creating an adaptive smart home to provide more value to the users. For example, air quality sensor stepping up to detect gas leak in case of failure of the gas leakage detector. One of the root cause for the same is the inability of the electronic appliance to explore its capability as well as the capability of other electronic appliances in the smart home network.

The issues mainly faced in the existing electronic appliances are that they are not capable to handle additional functionalities beyond which they are intended to do or enhance its functionalities and also compare itself with another device and start performing functionality of the secondary device if it has the required resources.

WO 2015/126198 A1 is directed to a method for resource and power management of a plurality of electronic devices, which includes collecting information related to each of the electronic devices, deactivating a specific function of one of the plurality of electronic devices based on the device related information, and performing the deactivated function through another of the plurality of electronic devices.

WO 01/63413 A2 is directed to a method for providing standardized extended functionality in a communication system including a controller station and a controlled station, interconnected via a communication network, a set of functions of the controlled station being accessible through a base software element.

### SUMMARY

The present invention defines a method according to claim 1, a functionality detection unit according to claim 6 and a non-transitory computer readable medium according to claim 7. Further embodiments are set forth in the dependent claims 2-5.

The below mentioned embodiments are meant to be examples useful for understanding the invention and are not part of the invention.

Disclosed herein is a method and system for extending functionality of an electronic appliance. This is achieved by using a functionality detection unit which is incorporated in the electronic appliance. The functionality detection unit determines whether the electronic appliance is capable of performing one or more secondary functionalities or not based on the comparison of data, properties and functions of the electronic appliance with data, properties and functions of other electronic appliances in the communication network.

Accordingly, the present disclosure relates to a method for extending the functionality of a primary electronic appliance, inter-connected with one or more secondary electronic appliances in a communication network. The method comprises identifying by a functionality detection unit configured in the primary electronic appliance, one or more functions of the primary electronic appliance and one or more properties and data required for performing the one or more functions of the primary electronic appliance. Further, the functionality detection unit obtains one or more functions of one of the one or more secondary electronic appliances and one or more properties and data required for performing the one or more functions of the one or more secondary electronic appliance. The method further comprises the functionality detecting unit comparing the one or more functions of the primary electronic appliance, and the one or more properties and data required for performing the one or more functions of the primary electronic appliance with the one or more functions of the secondary appliance, and the one or more properties and data required for performing the one or more functions of the secondary electronic appliance. Based on the comparison, the functionality detection unit determines similarity in the one or more functions for the primary electronic appliance and one or more properties and data required for performing the one or more functions of the primary electronic appliance with the corresponding one or more functions of the secondary electronic appliance and the one or more properties and data required for performing the one or more functions of the one or more secondary electronic appliance. Thereafter, the functionality detection unit detects, using one or more parameters of the primary electronic appliance, inefficient performance of the primary electronic appliance performing the one or more functions of the primary electronic appliance and invokes one of the one or more functions of the secondary electronic appliance, determined based on the similarity, to improve efficiency of the performance of the primary electronic appliance performing the one or more functions of the primary electronic appliance, thereby extending functionality of the primary electronic appliance.

Further, the present disclosure relates to a method for extending functionality of a primary electronic appliance, inter-connected with one or more secondary electronic appliances in a communication network, the method comprising:
identifying, by a functionality detection unit configured in the electronic appliance, one or more functions associated with the primary electronic appliance, and information associated with one or more properties and data required for performing the one or more functions associated with the primary electronic appliance;
obtaining, by the functionality detection unit, one or more functions associated with the one or more secondary electronic appliances and information associated with one or more properties and data required for performing the one or more functions associated with the one or more secondary electronic appliances;
comparing, by the functionality detection unit, the information associated with one or more properties and data required for performing the one or more functions associated with the primary electronic appliance with the information associated with one or more properties and data required for performing the one or more functions associated with the one or more secondary electronic appliances;
determining, by the functionality detection unit, similarity in the information associated with one or more properties and data required for performing the one or more functions associated with the primary electronic appliance with the information associated with one or more properties and data required for performing the one or more functions associated with the one or more secondary electronic appliances based on the comparison; and
invoking, by the functionality detection unit, the one or more functions associated with the secondary electronic appliance based on the similarity thereby extending functionality of the primary electronic appliance.

The detection unit is preferably configured in the primary appliance.

In an embodiment, invoking, by the functionality detection unit, the one or more functions associated with the secondary electronic appliance further comprises detecting inefficient performance of the one or more functions associated with the primary electronic appliances.

Further, the present disclosure relates to a functionality detection unit for extending functionality of a primary electronic appliance inter-connected with rest of electronic appliances in a communication network. The functionality detection unit comprises a processor and a memory communicatively coupled to the processor, wherein the memory stores processor executable instructions, which, on execution, causes the processor to identify one or more functions associated with the primary electronic appliance and information associated with one or more properties and data required for performing the one or more functions associated with the primary electronic appliance. The processor further obtains one or more functions associated with the one or more secondary electronic appliances and information associated with one or more properties and data required for performing the one or more functions associated with the one or more secondary electronic appliances. Thereafter, the processor compares the information associated with one or more properties and data required for performing the one or more functions associated with the primary electronic appliance with the information associated with one or more properties and data required for performing the one or more functions associated with the one or more secondary electronic appliances. Based on the comparison, the processor determines similarity in the information associated with one or more properties and data required for performing the one or more functions associated with the primary electronic appliance with the information associated with one or more properties and data required for performing the one or more functions associated with the one or more secondary electronic appliances .The processor invokes the one or more functions associated with the secondary electronic appliances based on the similarity thereby extending functionality of the primary electronic appliance.

Furthermore, the present disclosure relates to a non-transitory computer readable medium including instructions stored thereon that when processed by at least one processor cause a functionality detection unit configured in a primary electronic appliance inter-connected with one or more secondary electronic appliances in a communication network to identify one or more functions associated with the primary electronic appliance and information associated with one or more properties and data required for performing the one or more functions associated with the primary electronic appliance. The instructions further causes the functionality detection unit to obtain one or more functions associated with the one or more secondary electronic appliances and information associated with one or more properties and data required for performing the one or more functions associated with the one or more secondary electronic appliances. Thereafter, the functionality detection unit compares the information associated with one or more properties and data required for performing the one more functions associated with the primary electronic appliance with the information associated with one or more properties and data required for performing the one or more functions associated with the one or more secondary electronic appliances. Based on the comparison, the functionality detection unit determines similarity in the information associated with one or more properties and data required for performing the one or more functions associated with the primary electronic appliance with the information associated with one or more properties and data required for performing the one or more functions associated with the one or more secondary electronic appliances. The functionality detection unit invokes the one or more functions associated with the secondary electronic appliance based on the similarity thereby extending functionality of the primary electronic appliance.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING DRAWINGS

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
**Fig.1** shows an exemplary environment illustrating a method for extending functionality of a primary electronic appliance for performing one or more secondary functionalities in accordance with some embodiments of the present disclosure;
**Fig.2a** shows a block diagram illustrating a functionality detection unit in accordance with some embodiments of the present disclosure;
**Fig.2b** shows a detailed block diagram illustrating a functionality detection unit in accordance with some embodiments of the present disclosure;
**Fig.3a** shows a sequence diagram illustrating a method of providing support for performing the secondary functionalities by a primary electronic appliance in accordance with some exemplary embodiments of the present disclosure; and
**Fig.3b** shows a sequence diagram illustrating a method for extending the primary functionality of the primary electronic appliance in accordance with some exemplary embodiments of the present disclosure;
**Fig.4** illustrates an exemplary flowchart showing the method for performing secondary functionalities of one or more electronic appliances in accordance with some embodiments of present disclosure; and
**Fig.5** illustrates a block diagram of an exemplary electronic appliance for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

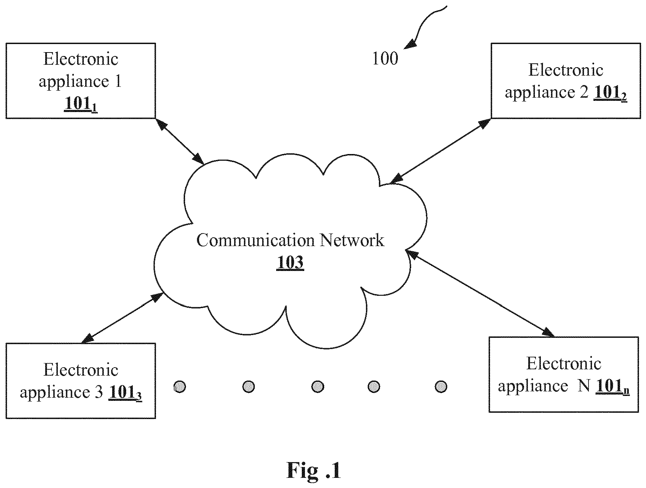

**Fig.1** shows an exemplary environment illustrating a method for extending the functionality of a primary electronic appliance for performing one or more secondary functionalities in accordance with some embodiments of the present disclosure.

As shown in **Fig.1**, the environment **100** comprises one or more electronic appliances, electronic appliance 1 **101₁,** electronic appliance **2 101₂** to electronic appliance **N 101ₙ** (collectively referred as electronic appliances **101**) interconnected through a communication network **103.** As an example, the electronic appliance **1 101₁** may be referred as a primary electronic appliance and the electronic appliances **2 101₂** to electronic appliance **N 101ₙ** may be referred as secondary electronic appliances.

As an example, the electronic appliances **101,** may include, but not limited to, a refrigerator, lighting systems, security lock of gates and doors, an air cooler, a gas detector and an air quality sensor. The communication network **103** may include, but not limited to, a wired communication network **103,** a wireless communication network **103** and a combination thereof. In an embodiment, each of the electronic appliances **101** is configured with a functionality detection unit (not shown explicitly in **Fig.1****)**. The functionality detection unit is configured to extend functionality of the electronic appliances **101.** As an example, if the electronic appliance **101** is an air cooler, one of the functionality of the air cooler is to condition the air. The functionality detection unit configured in the air cooler determines whether the functionality of the air cooler can be extended to perform the secondary functionalities or not. As an example, the secondary functionality may be to reduce the humidity of the air in a particular area which is one of the functions of the air conditioner.

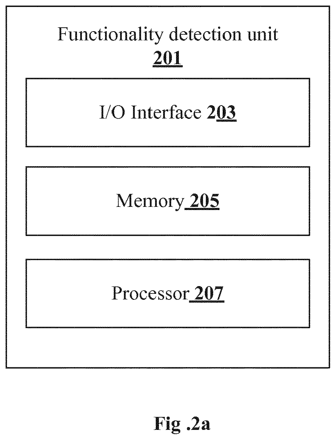

**Fig.2a** shows a block diagram illustrating a functionality detection unit **201** in accordance with some embodiments of the present disclosure.

As shown in **Fig.2a****,** the functionality detection unit **201** comprises an I/O interface **203,** a memory **205** and a processor **207.** The I/O interface **203** is configured to receive data from the one or more secondary electronic appliances in the communication network **103.** The I/O interface **203** is also configured to receive one or more events from the one or more secondary electronic appliances. The received data and the events are stored in the memory **205.** The memory **205** is communicatively coupled to the processor **207** wherein the memory **205** stores processor-executable instructions. The processor **207** identifies the one or more functions of the primary electronic appliance. The processor **207** also determines information associated with the one or more properties and the data required by the primary electronic appliance for performing the one or more functions. The processor **207** obtains the one or more functions associated with the one or more secondary electronic appliances and information associated with one or more properties and the data required for performing the one or more functions associated with the one or more secondary electronic appliances. The processor **207** compares the one or more functions, data and properties corresponding to the primary electronic appliance with the one or more functions, data and the properties corresponding to the one or more secondary electronic appliances. Based on the comparison, the processor **207** determines similarity between the one or more functions, data and properties corresponding to the primary electronic appliance and the one or more functions, data and properties corresponding to the one or more secondary electronic appliances **101.** The term "similarity" is preferably used herein to provide a measure of correspondence or correlation. Based on the similarity of the functions, data and the properties, the processor **207** invokes the functions associated with the one or more secondary electronic appliance for extending the functionality of the primary electronic appliance. In other words, the functions associated with the one or more secondary electronic appliance are activated to extend the functionality of the primary electronic application.

Further, the processor **207** obtains processing logic to perform the one or more secondary functionalities. In an embodiment, the processing logic may be preconfigured in the primary electronic appliance or retrieved from the one or more secondary electronic appliances.

In an embodiment, the functions are invoked upon determining the inefficiency of the primary electronic appliance for performing the one or more functions. As an example, the inefficiency is detected using parameters, include, but are not limited to, energy consumption, processing capacity, storage capacity and network resources.

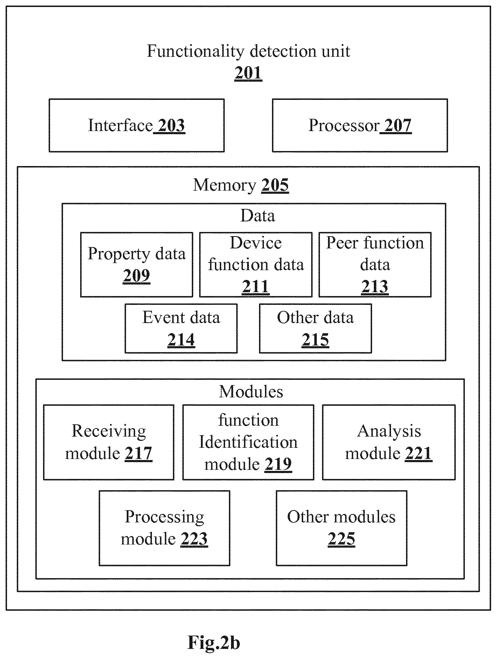

**Fig.2b** shows a detailed block diagram illustrating a functionality detection unit **201** in accordance with some embodiments of the present disclosure.

In one implementation, the functionality detection unit **201** receives data from the primary electronic appliance in which the functionality detection unit **201** is configured, and the one or more secondary electronic appliances. The functionality detection unit **201** may also receive one or more events from the one or more secondary electronic appliances **101.** In an embodiment, the data includes property data **209,** device function data **211,** peer device function data **213,** event data **214** and other data **215.** In the illustrated **Fig.2b****,** one or more modules stored in the memory **205** are described herein in detail.

In one embodiment, the data may be stored in the memory **205** in the form of various data structures. Additionally, the aforementioned data can be organized using data models, such as relational or hierarchical data models. The other data **215** may be used to store data, including temporary data and temporary files, generated by modules for performing the various functions of the functionality detection unit **201.**

In an embodiment, the event data **214** comprises information of internal triggers and the external triggers. The internal triggers are the events which are generated within the primary electronic appliance. As an example, the internal triggers may include, but are not limited to, initialization of the system, data associated with one or more sensors and events from device business logic. The external triggers are the events which are generated by the one or more secondary electronic appliances in the communication network **103.** The external triggers may include, but are not limited to, system admin control command and hot plug of resources. As an example, the primary electronic appliance may receive the events from within and the one or more secondary electronic appliances for initializing the functionality detection unit **201** upon which the functionality detection unit **201** extends the functionality of the primary electronic appliance for performing one or more secondary functionalities as well.

In an embodiment, the property data **209** comprises information of one or more properties which is currently used by the primary electronic appliance for performing the primary functionality. The property data **209** provides a link between the primary electronic appliance and resources used by the primary electronic appliance for performing the one or more functions of the primary electronic appliance. As an example, the data associated with temperature provides a link between two electronic appliances **101** namely refrigerator and air conditioner.

In an embodiment, the device function data **211** comprises information of one or more functions capable of being performed by the primary electronic appliance. As an example, the functions of the primary electronic appliance namely an air conditioner may be cooling, displaying the room temperature and reducing the humidity of the air etc.

In an embodiment, the peer device function data **213** comprises information of one or more functions capable of being performed by the one or more secondary electronic appliances.

In an embodiment, the data stored in the memory **205** are processed by the modules of the functionality detection unit **201.**

The modules may be stored within the memory **205** as shown in **Fig.2b****.** In an example, the modules, communicatively coupled to the processor **207** may also be present outside the memory **205.**

In one implementation, the modules may include, for example, a receiving module **217,** a function identification module **219,** an analysis module **221, a** processing module **223** and other modules **225.** The other modules **225** may be used to perform various miscellaneous functionalities of the functionality detection unit **201.** It will be appreciated that such aforementioned modules may be represented as a single module or a combination of different modules.

In an embodiment, the receiving module **217** is configured to receive data and events from the primary electronic appliance and the one or more secondary electronic appliances. The receiving module **217** is also configured to receive, information associated with one or more properties of the one or more secondary electronic appliances required for performing the one or more functions associated with the one or more secondary electronic appliances **101.**

In an embodiment, the function identification module **219** is configured to identify the functions of the primary electronic appliance and the functions of the one or more secondary electronic appliances. The functions performed by the primary electronic appliance are stored in a function table configured in the primary electronic appliance. As an example, if the primary electronic appliance is an air conditioner then the one or more functions performed by the air conditioner are stored in the function table as shown below in **Table 1.** In an embodiment, the function identification module **219** also obtains the one or more functions associated with the one or more secondary electronic appliances and stores in a peer function table as shown below in **Table 2.** The functions performed by the one or more secondary electronic appliances are stored in a peer device function table configured in the primary electronic appliance. As an example, if the secondary electronic appliance is a refrigerator, then the one or more functions performed by the refrigerator are stored in the peer function table in Table 2.

**Table 1**

| Function table |
|---|
| 1. Conditioning air |
| 2. Indicating room temperature |
| 3. Reducing humidity of air |

**Table 2**

| Peer function table |
|---|
| 1. Internal cooling |
| 2. Providing warning signals |

In an embodiment, the analysis module **221** unit is configured to compare the information associated with one or more properties and data required for performing the one or more functions associated with the primary electronic appliance with the information associated with one or more properties and data required for performing the one or more functions associated with the one or more secondary electronic appliances. Based on the comparison the analysis module **221** detects the similarity in the one or more properties data and functions of the primary electronic appliances corresponding to the properties data and functions of the one or more secondary electronic appliances.

In an embodiment, the processing module **223** is configured to identify the processing logic for performing the one or more functions of the one or more secondary electronic appliances once a similarity is detected in the properties, data and functions of the primary electronic appliance with the corresponding properties data and functions of the one or more secondary electronic appliances. The processing logic may be present within the primary electronic appliance or the processing module **223** may retrieve it from one of one or more secondary electronic appliances with which the functions, data and properties have been matched. Once the required processing logic is received, the processing module **223** extends the functionality of the primary electronic appliance for performing the one or more secondary functionalities based on the processing logic.

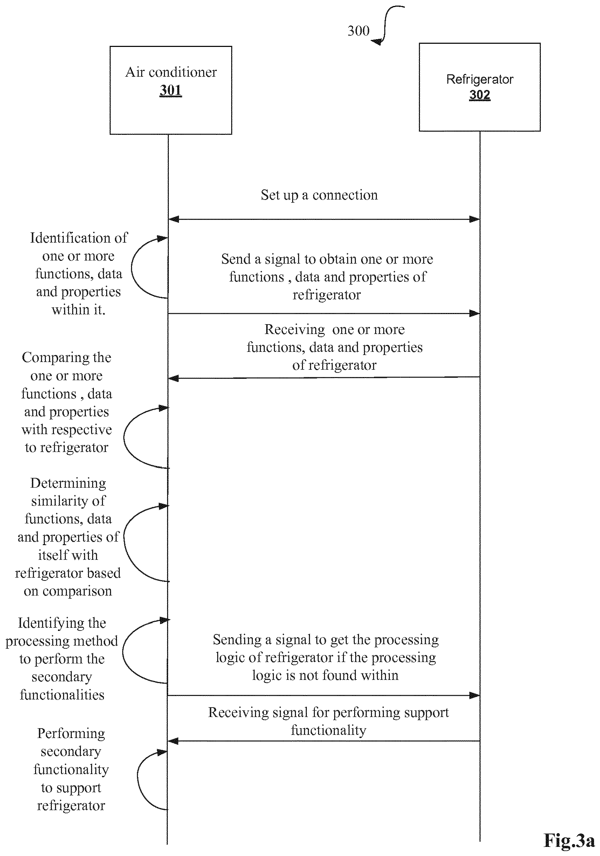

**Fig.3a** shows a sequence diagram illustrating a method for extending the primary functionality of the primary electronic appliance in accordance with some exemplary embodiments of the present disclosure.

As shown in **Fig. 3a** two electronic appliances namely an air conditioner **301** and a refrigerator **302** are connected through the communication network **103.** The air conditioner **301** is configured to condition the air and the refrigerator **302** is configured to provide cooling inside the refrigerator **302.** So, the primary functionality of the air conditioner **301** is to condition the room temperature and the primary functionality of the refrigerator **302** is to provide cooling inside the refrigerator **302.** The function identification module **219** configured in the functionality detection unit **201** of the air refrigerator **302** identifies the one or more functions of the refrigerator **302.** The one or more functions of the refrigerator **302** are providing cooling inside the refrigerator **302,** providing warning signals for closing the door of the refrigerator **302** etc. Similarly, the one or more functions of the air conditioner **301** are conditioning the air, indicating room temperature, reduce the humidity of the air in a particular area. As an example, the air conditioner **301** and refrigerator **302** initially sets up a connection between each other. Once the connection is established, the refrigerator **302** identifies its own one or more functions and probes the air conditioner **301** to provide the information associated with the one or more functions and data and properties required for performing the one or more functions of the air conditioner **301.** The air conditioner **301** provides information of the one or more functions, data and properties to the refrigerator **302.** The analysis module **221** of the refrigerator **302** compares the functions, data and properties of the air conditioner **301** with the functions, properties and data of the air conditioner **301.** As an example, the functionality detection unit **201** of the refrigerator **302** may detect inefficient performance of the refrigerator **302** in terms of energy consumption. For example, the energy consumed by the refrigerator **302** for its operations at current room temperature may be x units. The refrigerator **302** identifies the optimal external temperature for efficient cooling inside the refrigerator **302.** As an example, the current room temperature may be 25 degree Celsius. The optimal external temperature for efficient internal cooling may be 20 degree Celsius. The energy consumed by the refrigerator **302** for efficient internal cooling is more as being performed by the air conditioner **301.** Therefore, the refrigerator **302** invokes the functionality of the air conditioner **301** to reduce the temperature from 25 to 20 degree Celsius thereby providing optimal cooling and energy utilization.

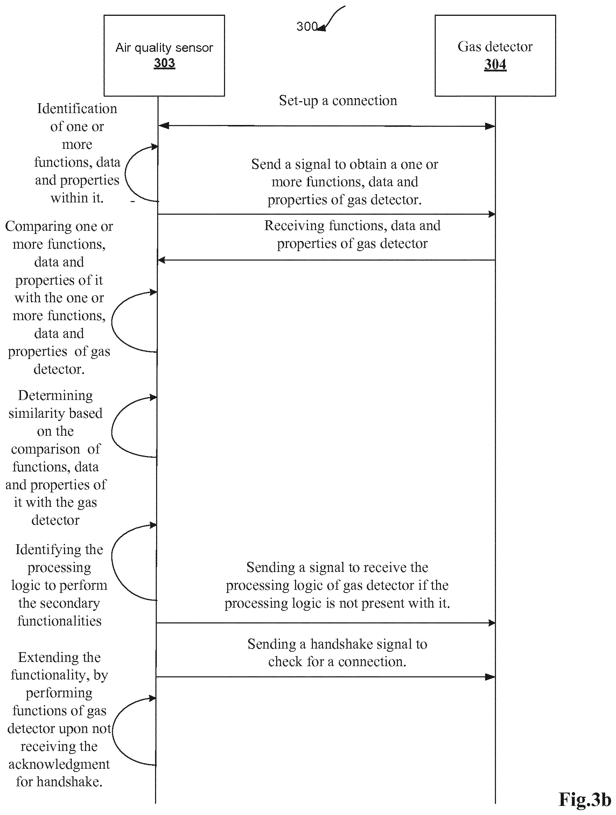

**Fig.3b** shows a sequence diagram illustrating a method of providing support for performing the secondary functionalities by a primary electronic appliance in accordance with some exemplary embodiments of the present disclosure.

As shown in **Fig. 3b****,** two electronic appliances **101,** namely an air quality sensor **303** and a gas detector **304** are connected through the communication network **103.** The air quality sensor **303** is configured to detect the quality of air in the surrounding and the gas detector **304** is configured to detect the presence of gas leakage. So the primary functionality of the air quality sensor **303** is detecting the quality of air and the primary functionality of gas detector **304** is to detect any gas leakage. The function identification module **219** configured in the air quality sensor **303** identifies the functions of the air quality sensor. The functions of the air quality sensor **304** may be detecting the quality of air, measuring the concentration of gases in the air etc. Similarly, the functions of the gas detector **304** are detecting any gas leakage, indicating the concentration of gases etc. As an example, the air quality sensor **303** and gas detector **304** initially sets up a connection between each other. Once the connection is established, the air quality sensor **303** identifies its own one or more functions and also probes the gas detector **304** to provide the information associated with the one or more function of the gas detector **304.** The gas detector **304** provides information of the one or more functions, to the air quality sensor. The analysis module **221** of the air quality sensor **303** compares the functions, data and properties of the air quality sensor **303** with the gas detector **304.** The processing module **223** of the air quality sensor **303** checks the availability of the processing logic to perform the secondary functionality of detecting the gas leakage. If the processing logic is not available in the air quality sensor **303,** the air quality sensor **303** receives the information associated with the processing logic from the gas detector **304.**

The air quality sensor **303** and the gas detector **304** on predefined time intervals exchange handshake signals to detect whether the electronic appliances **101** are working or not. As an example, the air quality sensor **303** has not received an acknowledgement from the gas detector **304** for the handshake signal upon which the air quality sensor **303** detects failure of the gas detector **304.** Hence the air quality sensor **303** performs the secondary functionality of detecting a gas leakage which was the primary functionality of the gas detector **304.**

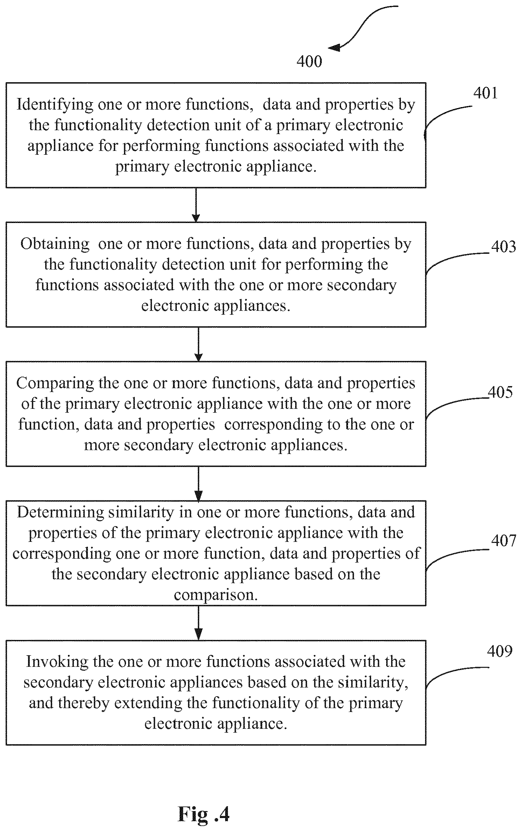

**Fig.4** illustrates a flowchart showing the method for extending the functionality of the primary electronic appliance in accordance with some embodiments of present disclosure. As illustrated in **Fig.4****,** the method **400** comprises one or more blocks for extending the functionality of the primary electronic appliance interconnected with the one or more secondary electronic appliances using a functionality detection unit **201.** The method **400** may be described in the general context of computer executable instructions. Generally, computer executable instructions can include routines, programs, objects, components, data structures, procedures, modules, and functions, which perform particular functions or implement particular abstract data types.

The order in which the method **400** is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At **block 401,** one or more functions of the primary electronic appliance and information associated with one or more properties and data required for performing the one or more functions associated with the primary electronic appliance are identified by the function identification module **219** of the functionality detection unit **201.** The information of the one or more functions associated with the primary electronic device and the properties and the data are stored in the function list table of the primary electronic appliance.

At **block 403,** obtaining one or more function associated with the one or more secondary electronic appliances and information associated with one or more properties and data required for performing the one or more functions associated with the one or more secondary electronic appliances is determined by the function identification module **219** of the functionality detection unit **201.** The information of the one or more functions, data and properties corresponding to the one or more secondary electronic appliances are stored in a peer function list table which is configured in the primary electronic appliances. The peer function table is updated when the one or more secondary electronic appliances are identified in the communication network **103.**

At **block 405,** the one or more functions, data and properties associated with the primary electronic appliance is compared with the one or more functions, data and the properties corresponding to the one or more secondary electronic appliances. The comparison is performed by the analysis module **221** of the functionality detection unit **201**

At **block 407,** the analysis module **221** of the primary electronic appliance determines similarity in the properties and data associated with the primary electronic appliance with the one or more data and properties of the corresponding one or more secondary electronic appliances.

At block **409,** the processing module **223** checks for the availability of the processing logic to perform the secondary functionality of the one or more secondary electronic appliance upon detecting the similarities in the properties data and functions of the primary electronic appliances with the corresponding properties data and functions of the one or more secondary electronic appliances. If the processing logic is not available within the primary electronic appliance the processing module **223** of the primary electronic appliance receives it from the secondary electronic appliances. Upon receiving the processing logic the processing module **223** invokes the one or more functions associated with the secondary electronic appliances based on the similarity, and thereby extends the functionality of the primary electronic appliance.

### Electronic Appliance

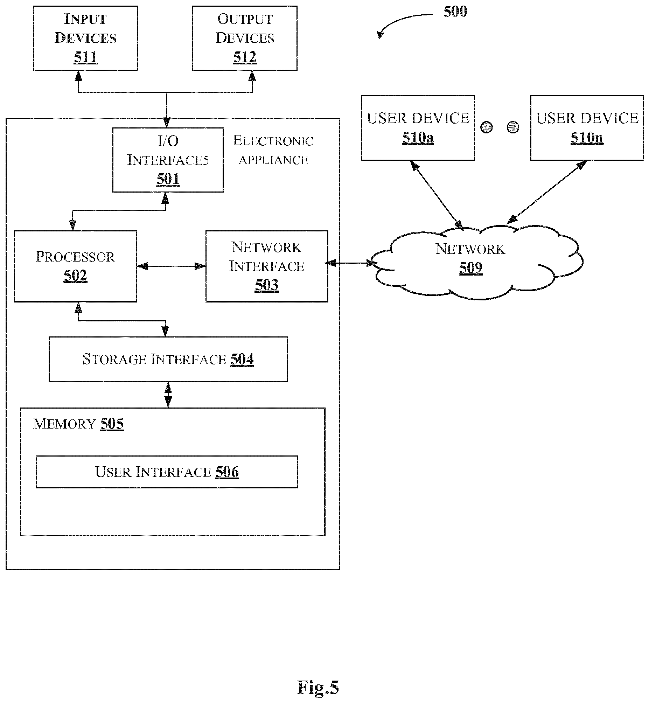

**Fig.5** illustrates a block diagram of an exemplary electronic appliance for implementing embodiments consistent with the present disclosure. In an embodiment, the electronic Appliance **500** is used for performing the one or more secondary functionalities using functionality detection unit **201.** The electronic appliance **500** may comprise a central processing unit ("CPU" or "processor") **502.**

The processor **502** may be disposed in communication with one or more input/output (I/O) devices (**511** and **512**) via I/O interface **501.** The I/O interface **501** may employ communication protocols/methods such as, without limitation, audio, analog, digital, stereo, IEEE-1394, serial bus, Universal Serial Bus (USB), infrared, PS/2, BNC, coaxial, component, composite, Digital Visual Interface (DVI), high-definition multimedia interface (HDMI), Radio Frequency (RF) antennas, S-Video, Video Graphics Array (VGA), IEEE 802.n /b/g/n/x, Bluetooth, cellular (e.g., Code-Division Multiple Access (CDMA), High-Speed Packet Access (HSPA+), Global System For Mobile Communications (GSM), Long-Term Evolution (LTE), WiMax, or the like), etc.

Using the I/O interface **501,** the electronic appliance **500** may communicate with one or more I/O devices (**511** and **512**).

In some embodiments, the processor **502** may be disposed in communication with a communication network **509** via a network interface **503.** The network interface **503** may communicate with the communication network **509.** The network interface **503** may employ connection protocols including, without limitation, direct connect, Ethernet (e.g., twisted pair 10/100/1000 Base T), Transmission Control Protocol/Internet Protocol (TCP/IP), token ring, IEEE 802.11a/b/g/n/x, etc. Using the network interface **503** and the communication network **509,** the electronic appliance **500** may communicate with one or more user devices **510 (a,..n).** The communication network **509** can be implemented as one of the different types of networks, such as intranet or Local Area Network (LAN) and such within the home or organization. The communication network **509** may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the communication network **509** may include a variety of network devices, including routers, bridges, servers, computing devices, storage devices, etc. The one or more user devices **510 (a,...,n)** may include, without limitation, personal computer(s), mobile devices such as cellular telephones, smartphones, tablet computers, eBook readers, laptop computers, notebooks, gaming consoles, or the like.

In some embodiments, the processor **502** may be disposed in communication with a memory **505** (e.g., RAM, ROM, etc. not shown in **Fig.5**) via a storage interface **504.** The storage interface **504** may connect to memory **505** including, without limitation, memory drives, removable disc drives, etc., employing connection protocols such as Serial Advanced Technology Attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory **505** may store a collection of program or database components, including, without limitation, user interface application **506**, an operating system **507**, web server **508** etc. In some embodiments, computer system **500** may store user/application data **506**, such as the data, variables, records, etc. as described in this invention. Such databases may be implemented as fault-tolerant, relational, scalable, secure databases such as Oracle or Sybase.

Furthermore, one or more computer-readable storage media may be utilized in implementing embodiments consistent with the present invention. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., non-transitory. Examples include Random Access Memory (RAM), Read-Only Memory (ROM), volatile memory, non-volatile memory, hard drives, Compact Disc (CD) ROMs, Digital Video Disc (DVDs), flash drives, disks, and any other known physical storage media.

### Advantages of the embodiment of the present disclosure are described below

In an embodiment, the present disclosure provides a method for extending the functionality of primary electronic appliances for performing one or more functionalities in a communication network.

In an embodiment, the present disclosure provides a method to support the primary electronic appliances upon detecting similarity in the functions between the one or more secondary electronic appliances.

In an embodiment, the present disclosure provides a method wherein, primary electronic appliance can perform the secondary functionalities upon detecting the failure of one or more secondary electronic appliances.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise.

The terms "a", "an" and "the" mean "one or more", unless expressly specified otherwise.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A processor-implemented method for extending functionality of a primary electronic appliance (101₁), inter-connected with one or more secondary electronic appliances (101₂, 1013) in a communication network (103), the method performed by a functionality detection unit (201) configured in the primary electronic appliance (101₁), the method comprising:
identifying (401) one or more functions of the primary electronic appliance (101₁), and one or more properties (209) and data required for performing the one or more functions of the primary electronic appliance (101₁), wherein the primary electronic appliance is a refrigerator;
obtaining (403) one or more functions of one of the one or more secondary electronic appliances (101₂, 101₃), and one or more properties and data required for performing the one or more functions of the secondary electronic appliance (101₂, 101₃), wherein the secondary electronic appliance is an air conditioner;
comparing (405) the one or more functions of the primary electronic appliance, and the one or more properties and data required for performing the one or more functions of the primary electronic appliance (101₁) with the one or more functions of the secondary appliance, and the one or more properties and data required for performing the one or more functions of the secondary electronic appliance (101₂, 101₃);
determining (407) a similarity in the one or more functions of the primary electronic appliance and one or more properties and data required for performing the one or more functions of the primary electronic appliance (101₁) with the corresponding one or more functions of the secondary electronic appliance and the one or more properties and data required for performing the one or more functions of the secondary electronic appliance (101₂, 101₃) based on the comparison;
detecting, using one or more parameters of the primary electronic appliance, inefficient performance of the primary electronic appliance (101₂, 101₃) performing the one or more functions of the primary electronic appliance, wherein detecting inefficient performance of the primary electronic appliance comprises detecting inefficient performance of the refrigerator in the terms of energy consumption; and
invoking (409) one of the one or more functions of the secondary electronic appliance (101₂, 101₃), determined based on the similarity, thereby extending functionality of the primary electronic appliance (101₁), wherein invoking the function of the secondary electronic appliance comprises:
identifying an optimal external temperature for efficient cooling inside the refrigerator, and
invoking a functionality of the air conditioner to reduce a current external temperature to the optimal external temperature.

2. The method as claimed in claim 1, further comprising obtaining one or more processing logics for performing the one or more functions of the one or more secondary electronic appliances (101₂, 101₃).

3. The method as claimed in claim 1 or 2, wherein the one or more parameters include energy consumption, processing capacity, storage capacity, communication network resources.

4. The method as claimed in any one of the preceding claims, wherein the one or more functions of the primary electronic appliance (101₁) are listed in a function list table configured in the primary electronic appliance.

5. The method as claimed in any one of the preceding claims, wherein the one or more functions of the one or more secondary electronic appliances (101₂, 101₃) are listed a peer function table configured in the primary electronic appliance.

6. A functionality detection unit (201) for extending functionality of a primary electronic appliance (101₁), the primary electronic appliance being suitable to be inter-connected with one or more secondary electronic appliances (101₂, 101₃) in a communication network (103), the functionality detection unit comprising:
a processor (207); and
a memory (205) communicatively coupled to the processor (207), wherein the memory stores processor executable instructions, which, on execution, cause the processor (207) to perform the method of any preceding claim.

7. A non-transitory computer readable medium including instructions stored thereon that when processed by at least one processor (207) cause a functionality detection unit (201) configured in an electronic appliance to perform the method from any one of claims 1 to 5.

## Patentansprüche

1. Prozessorimplementiertes Verfahren zum Erweitern der Funktionalität eines primären elektronischen Geräts (101₁), das mit einem oder mehreren sekundären elektronischen Geräten (101₂, 101₃) in einem Kommunikationsnetzwerk (103) verbunden ist, wobei das Verfahren durch eine Funktionserfassungseinheit (201) durchgeführt wird, die in dem primären elektronischen Gerät (101₁) konfiguriert ist, wobei das Verfahren Folgendes umfasst:
Identifizieren (401) einer oder mehrerer Funktionen des primären elektronischen Geräts (101₁) und einer oder mehrerer Eigenschaften (209) und Daten, die zum Ausführen der einen oder mehreren Funktionen des primären elektronischen Geräts (101₁) erforderlich sind, wobei das primäre elektronische Gerät ein Kühlschrank ist,
Beziehen (403) einer oder mehrerer Funktionen eines des einen oder der mehreren sekundären elektronischen Geräte (101₂, 101₃) und einer oder mehrerer Eigenschaften und Daten, die zum Ausführen der einen oder mehreren Funktionen des sekundären elektronischen Geräts (101₂, 101₃) erforderlich sind, wobei das sekundäre elektronische Gerät eine Klimaanlage ist,
Vergleichen (405) der einen oder mehreren Funktionen des primären elektronischen Geräts und der einen oder mehreren Eigenschaften und Daten, die zum Ausführen der einen oder mehreren Funktionen des primären elektronischen Geräts (101₁) erforderlich sind, mit der einen oder den mehreren Funktionen des sekundären Geräts und der einen oder den mehreren Eigenschaften und Daten, die zum Ausführen der einen oder mehreren Funktionen des sekundären elektronischen Geräts (101₂, 101₃) erforderlich sind,
Bestimmen (407) einer Ähnlichkeit in der einen oder den mehreren Funktionen des primären elektronischen Geräts und einer oder mehreren Eigenschaften und Daten, die zum Ausführen der einen oder mehreren Funktionen des primären elektronischen Geräts (101₁) mit der entsprechenden einen oder den mehreren Funktionen des sekundären elektronischen Geräts und der einen oder den mehreren Eigenschaften und Daten, die zum Ausführen der einen oder mehreren Funktionen des sekundären elektronischen Geräts (101₂, 101₃) basierend auf dem Vergleich erforderlich sind,
Erfassen, unter Verwendung eines oder mehrerer Parameter des primären elektronischen Geräts, einer ineffizienten Leistung des primären elektronischen Geräts (101₂, 101₃), das eine oder mehrere Funktionen des primären elektronischen Geräts ausführt, wobei das Erfassen einer ineffizienten Leistung des primären elektronischen Geräts das Erfassen einer ineffizienten Leistung der Kühlanlage in Bezug auf den Energieverbrauch umfasst,
und Aufrufen (409) einer der einen oder mehreren Funktionen des sekundären elektronischen Geräts (101₂, 101₃), die basierend auf der Ähnlichkeit bestimmt sind, wodurch die Funktionalität des primären elektronischen Geräts (101₁) erweitert wird, wobei das Aufrufen der Funktion des sekundären elektronischen Geräts Folgendes umfasst:
Identifizieren einer optimalen Außentemperatur für eine leistungsfähige Kühlung im Kühlschrank und Aufrufen einer Funktionalität der Klimaanlage, um eine aktuelle Außentemperatur auf die optimale Außentemperatur zu senken.

2. Verfahren nach Anspruch 1, ferner umfassend das Beziehen einer oder mehrerer Verarbeitungslogiken zum Ausführen der einen oder mehreren Funktionen des einen oder der mehreren sekundären elektronischen Geräte (101₂, 101₃).

3. Verfahren nach Anspruch 1 oder 2, wobei der eine oder die mehreren Parameter Energieverbrauch, Verarbeitungskapazität, Speicherkapazität, Kommunikationsnetzwerk-Ressourcen beinhalten.

4. Verfahren, nach einem der vorhergehenden Ansprüche, wobei die eine oder mehreren Funktionen des primären elektronischen Geräts (101₁) in einer in dem primären elektronischen Gerät konfigurierten Funktionslistentabelle aufgeführt sind.

5. Verfahren, nach einem der vorhergehenden Ansprüche, wobei die eine oder mehreren Funktionen des einen oder der mehreren sekundären elektronischen Geräte (101₂, 101₃) in einer in das primäre elektronische Gerät konfigurierte Peer-Funktionstabelle aufgelistet sind.

6. Funktionserfassungseinheit (201) zum Erweitern der Funktionalität eines primären elektronischen Geräts (101₁), wobei das primäre elektronische Gerät geeignet ist, mit einem oder mehreren sekundären elektronischen Geräten (101₂, 101₃) in einem Kommunikationsnetzwerk (103) verbunden zu werden, wobei die Funktionserfassungseinheit Folgendes umfasst:
einen Prozessor (207),
und einen Speicher (205), der kommunikativ mit dem Prozessor (207) gekoppelt ist, wobei der Speicher ausführbare Anweisungen des Prozessors speichert, die bei der Ausführung den Prozessor (207) veranlassen, das Verfahren eines vorhergehenden Anspruchs auszuführen.

7. Nichtflüchtiges, computerlesbares Medium mit darauf gespeicherten Anweisungen, die bei Verarbeitung durch mindestens einen Prozessor (207) eine in einem elektronischen Gerät konfigurierte Funktionserfassungseinheit (201) veranlassen, das Verfahren nach einem der Ansprüche 1 bis 5 auszuführen.

## Revendications

1. Procédé mis en oeuvre par processeur permettant d'étendre la fonctionnalité d'un appareil électronique principal (101₁), interconnecté avec un ou plusieurs appareils électroniques secondaires (101₂, 101₃) dans un réseau de communication (103), ledit procédé mis en oeuvre par une unité de détection de fonctionnalité (201) étant conçue dans l'appareil électronique principal (101₁), ledit procédé comprenant :
l'identification (401) d'une ou de plusieurs fonctions de l'appareil électronique principal (101₁), et une ou plusieurs propriétés (209) et des données nécessaires à l'exécution de la ou des fonctions de l'appareil électronique principal (101₁), ledit appareil électronique principal étant un réfrigérateur ;
l'obtention (403) d'une ou de plusieurs fonctions de l'un du ou des appareils électroniques secondaires (101₂, 101₃), et une ou plusieurs propriétés et données nécessaires à la l'exécution de la ou des fonctions de l'appareil électronique secondaire (101₂, 101₃), ledit appareil électronique secondaire étant un climatiseur ;
la comparaison (405) de la ou des fonctions de l'appareil électronique principal et de la ou des propriétés et données nécessaires pour exécuter la ou les fonctions de l'appareil électronique principal (101₁) à la ou aux fonctions de l'appareil secondaire, et à la ou aux propriétés et données nécessaires pour exécuter la ou les fonctions de l'appareil électronique secondaire (101₂, 101₃);
la détermination (407) d'une similarité dans la ou les fonctions de l'appareil électronique principal et l'une ou les propriétés et données nécessaires pour exécuter la ou les fonctions de l'appareil électronique principal (101₁) avec la ou les fonctions correspondantes de l'appareil électronique secondaire et la ou les propriétés et données nécessaires pour exécuter la ou les fonctions de l'appareil électronique secondaire (101₂, 101₃) sur la base de la comparaison ;
la détection, à l'aide d'un ou de plusieurs paramètres de l'appareil électronique principal, des mauvaises performances de l'appareil électronique primaire (101₂, 101₃) exécutant la ou les fonctions de l'appareil électronique principal, ladite détection des mauvaises performances de l'appareil électronique principal comprenant la détection des mauvaises performances du réfrigérateur en termes de consommation d'énergie ;
et le recours (409) à l'une de la ou des fonctions de l'appareil électronique secondaire (101₂, 101₃), déterminées sur la base de la similarité, étendant ainsi la fonctionnalité de l'appareil électronique principal (101₁), ledit recours à la fonction de l'appareil électronique secondaire comprenant :
l'identification d'une température externe optimale en vue d'un refroidissement efficace à l'intérieur du réfrigérateur et le recours à une fonctionnalité du climatiseur pour réduire la température externe actuelle à la température externe optimale.

2. Procédé selon la revendication 1, comprenant en outre l'obtention d'une ou plusieurs logiques de traitement destinées à exécuter la ou les fonctions de la ou des appareils électroniques secondaires (101₂, 101₃).

3. Procédé selon la revendication 1 ou 2, ledit ou lesdits paramètres comprenant la consommation d'énergie, la capacité de traitement, la capacité de stockage, les ressources du réseau de communication.

4. Procédé selon l'une quelconque des revendications précédentes, ladite ou lesdites fonctions de l'appareil électronique principal (101₁) étant listées dans une table de liste de fonctions configurée dans l'appareil électronique principal.

5. Procédé selon l'une quelconque des revendications précédentes, ladite ou lesdites fonctions du ou des appareils électroniques secondaires (101₂, 101₃) étant listées dans une table de fonctions homologues configurée dans l'appareil électronique principal.

6. Unité de détection de fonctionnalité (201) permettant d'étendre la fonctionnalité d'un appareil électronique principal (101₁), ledit appareil électronique principal étant adapté pour être interconnecté avec un ou plusieurs appareils électroniques secondaires (101₂, 101₃) dans un réseau de communication (103), ladite unité de détection de fonctionnalité comprenant :
un processeur (207) ;
et une mémoire (205) couplée en communication au processeur (207), ladite mémoire stockant des instructions pouvant être exécutées par un processeur, qui, lors de l'exécution, amènent le processeur (207) à exécuter le procédé selon l'une quelconque des revendications précédentes.

7. Support lisible par ordinateur non transitoire comprenant des instructions stockées sur celui-ci qui, lorsqu'elles sont traitées par au moins un processeur (207), amènent une unité de détection de fonctionnalité (201) configurée dans un appareil électronique à effectuer le procédé selon l'une quelconque des revendications 1 à 5.
